(19) Europäisches Patentamt
European Patent Office
Office européen des brevets

(11) EP 3 143 088 B1

(12) # EUROPÄISCHE PATENTSCHRIFT

(45) Veröffentlichungstag und Bekanntmachung des Hinweises auf die Patenterteilung:
**20.06.2018 Patentblatt 2018/25**

(21) Anmeldenummer: **15724959.0**

(22) Anmeldetag: **11.05.2015**

(51) Int Cl.:
***C08L 69/00*** *(2006.01)*

(86) Internationale Anmeldenummer:
**PCT/EP2015/060282**

(87) Internationale Veröffentlichungsnummer:
**WO 2015/173162 (19.11.2015 Gazette 2015/46)**

(54) **HYDROLYSESTABILE POLYCARBONAT-POLYESTER-ZUSAMMENSETZUNGEN**

HYDROLYTICALLY STABLE POLYCARBONATE POLYESTER COMPOSITIONS

COMPOSITIONS DE POLYESTER-POLYCARBONATE STABLES À L'HYDROLYSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2014 EP 14168116**

(43) Veröffentlichungstag der Anmeldung:
**22.03.2017 Patentblatt 2017/12**

(73) Patentinhaber: **Covestro Deutschland AG**
**51373 Leverkusen (DE)**

(72) Erfinder:
- **JUNG, Mathieu**
**200030 Shanghai (CN)**
- **HUFEN, Ralf**
**47239 Duisburg (DE)**

(74) Vertreter: **Levpat**
**c/o Covestro AG**
**Gebäude 4825**
**51365 Leverkusen (DE)**

(56) Entgegenhaltungen:
**EP-A2- 0 707 047 DE-A1-102005 002 044**
**US-B2- 8 071 694**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft hydrolysestabile Polycarbonat/Polyester -Zusammensetzungen mit gutem Fließverhalten, hoher Kerbschlagzähigkeit und erhöhtem Zug-E-Modul, bei denen der Polyester aus Bernsteinsäure und optional weiteren Dicarbonsäuren und aliphatischen, cycloaliphatischen oder araliphatischen Diolen abgeleitet und verzweigt ist, sowie die Verwendung dieser hydrolysestabilen Polycarbonat/Polyester-Zusammensetzungen zur Herstellung von Formkörpern und die Formkörper selbst.

JP 07-324159 beschreibt eine Polycarbonat-Zusammensetzung mit einem aliphatischen Polyester, die eine verbesserte Fließfähigkeit bei erhaltenen mechanischen Eigenschaften aufweisen. Es werden aber keine Angaben zur Hydrolysestabilität offenbart. Als aliphatische Polyester werden Polyethylensuccinat und Polybutylensuccinat genannt, nicht aber verzweigte Polyester der Bernsteinsäure.

JP 2011-016960 beschreibt eine Zusammensetzung aus Polycarbonat, aliphatischen Polyester und einem Ethylen-Glycidylmethacrylat Copolymer und Styrol polymer. Als bevorzugter aromatischer Polyester wird Polybutylensuccinat genannt. Durch das Copolymer wird die Zähigkeit verbessert. Es werden aber keine Hinweise auf verbesserte Hydrolyseeigenschaften und erhöhtes Zug-E-Modul gegeben. Verzweigte Polyester der Bernsteinsäure werden ebenfalls nicht erwähnt.

JP 2005-008671 beschreibt Zusammensetzungen aus Polycarbonat und aliphatischen Polyestercarbonate, die sich durch gute Reißfestigkeit und Verarbeitbarkeit sowie Bioabbaubarkeit auszeichnen. Das Polyestercarbonat wird durch eine Reaktion von oligomeren Butylensuccinat mit Diphenylcarbonat hergestellt. Es werden aber keine Hinweise auf verbesserte Hydrolyseeigenschaften erhöhtes Zug-E-Modul und verbesserte Kerbschlagzähigkeit gegeben. Verzweigte Polyester der Bernsteinsäurewerden ebenfalls nicht erwähnt.

US 8021864 beschreibt die Herstellung von aliphatischen Polyestern auf nachwachsenden Rohstoffen basierend und deren möglichen Zusammensetzung mit technischen Kunststoffen. Es werden aber keine Hinweise auf Verbesserungen der Hydrolysestabilität, des Fließverhaltens, der Kerbschlagzähigkeit und des Zug-E-Moduls genannt. Polycarbonat-Zusammensetzungen mit verzweigten Polyestern der Bernsteinsäure werden ebenfalls nicht erwähnt.

EP 0707047 A2 beschreibt Formkörper hergestellt aus verzweigten und unverzweigten Bernsteinsäurepolyestern. Es werden jedoch keine Zusammensetzungen enthaltend Polycarbonate als weiteren Thermoplasten und auch keine Informationen zu Hydrolysestabilität, Kerbschlagzähigkeit und Zug-E-Modul offenbart.

US 8071694 beschreibt Mischungen aus Polycarbonat, aliphatischen Polyestern und optional Polymilchsäure. Als Polyester wird besonders Polybutylensuccinat offenbart. Es werden gute mechanische Eigenschaften, Fließfähigkeit und Wärmeformbeständigkeit beschrieben. Zusammensetzungen mit verzweigten Polyestern der Bernsteinsäure werden nicht explizit genannt und gute Hydrolyseeigenschaften werden nur durch entsprechende Additive erreicht.

Während Kunststoffe zunehmend Metalle und Holz in vielen Bereichen der Technik und des täglichen Lebens ersetzten und intensiv an der Verbesserung ihrer Eigenschaften sowie an der Erschließung neuer Anwendungsgebiete gearbeitet wird, basiert ein großer Teil dieser Kunststoffe aber auf nicht nachwachsenden Rohstoffen, wie Erdöl, deren Vorräte begrenzt sind.

In den vergangen Jahren wurden daher einerseits Verfahren zum Recycling von Kunststoffen, andererseits Kunststoffe auf Basis nachwachsender Rohstoffe, z.B. Polymilchsäure (PLA) oder Polybutylensuccinat (PBS) entwickelt.

Ein Problem hierbei ist jedoch, dass diese Kunststoffe oftmals noch nicht die Spezifikationen und Eigenschaften der etablierten Materialien, insbesondere eine ausreichende Hydrolysestabilität, erreichen.

So ist beispielsweise bekannt, dass sich bei PC/PBS (Polycarbonat/Polybutylensuccinat) Blends eine Zusammensetzung mit guter Wärmeformbeständigkeit und Schlagzähigkeit erreichen lässt. Diese Blends weisen jedoch in der Regel eine geringe Hydrolysebeständigkeit und vermindertes Zug-E-Modul auf, die für die gewünschten Anwendungsbereiche unzureichend ist.

Aufgabe der vorliegenden Erfindung ist daher die Bereitstellung von Polycarbonat-Zusammensetzungen mit Polyestern welche Bernsteinsäure als Monomerbaustein (Dicarbonsäure) enthalten mit einer Kombination aus verbesserter Hydrolysebeständigkeit, gutem Fließverhalten, hoher Kerbschlagzähigkeit und hohem Zug-E-Modul.

Es wurde nun überraschend gefunden, dass die Zusammensetzungen bzw. Formmassen enthaltend Polycarbonat und verzweigte Polyester welche Bernsteinsäure als Monomerbaustein (Dicarbonsäure) enthalten zu Blends mit den gewünschten Eigenschaften führen.

Die Zusammensetzungen der vorliegenden Erfindung enthalten

A) 50 bis 95 Gew.-Teile, vorzugsweise 60 bis 90 Gew.-Teile, besonders bevorzugt 65 bis 85 Gew.-Teile aromatisches Polycarbonat,

B) 5 bis 50 Gew.-Teile, vorzugsweise 10 bis 40 Gew.-Teile, weiter bevorzugt 15 bis 35 Gew.-Teile verzweigten Polyester, wobei der Polyester aus Bernsteinsäure und optional weiteren Dicarbonsäuren und aliphatischen, cycloaliphatischen oder araliphatischen Diolen abgeleitet ist,

C) 0 bis 20 Gew.-Teile, bevorzugt 0 bis 15 Gew.-Teile, besonders bevorzugt 0 bis 10 Gew.-Teile Pfropfpolymerisat,

D) 0 bis 20 Gew.-Teile, bevorzugt 0 bis 15 Gew.-Teile, besonders bevorzugt 0 bis 10 Gew.-Teile Vinyl(Co)Polymerisat oder Polyalkylenterephthalat,

E) 0 bis 30 Gew.-Teile, bevorzugt 0,1 bis 15,0 Gew.-Teile , besonders bevorzugt 0,2 bis 5,0 Gew.-Teile Zusatzstoffe,

wobei die Gewichtsteile auf das Gesamtgewicht der Zusammensetzung normiert sind. Das bedeutet, dass die Summe der Gewichtsteile der Komponenten A) bis E) in der Zusammensetzung auf 100 normiert ist.

In einer weiteren Ausführungsform bestehen die Zusammensetzungen nur aus den Komponenten A-E.

Nachfolgend werden bevorzugte Ausführungsformen 1 bis 21 der vorliegenden Erfindung beschrieben:

1. Zusammensetzungen enthaltend

A) 50 bis 95 Gew.-Teile mindestens eines Polymers ausgewählt aus der Gruppe bestehend aus aromatisches Polycarbonat und aromatisches Polyestercarbonat,

B) 5 bis 50 Gew.-Teile mindestens eines verzweigten Polyesters wobei der Polyester aus Bernsteinsäure und optional weiteren Dicarbonsäuren und aliphatischen, cycloaliphatischen oder araliphatischen Diolen abgeleitet ist,

C) 0 bis 20 Gew.-Teile Pfropfpolymerisat,

D) 0 bis 20 Gew.-Teile Vinyl(Co)Polymerisat und/oder Polyalkylenterephthalat,

E) 0 bis 30 Gew.-Teile Zusatzstoffe

und wobei die Gewichtsteile auf das Gesamtgewicht der Zusammensetzung normiert sind.

2. Zusammensetzungen enthaltend

A) 60 bis 90 Gew.-Teile mindestens eines Polymers ausgewählt aus der Gruppe bestehend aus aromatisches Polycarbonat und aromatisches Polyestercarbonat,

B) 10 bis 40 Gew.-Teile mindestens eines verzweigten Polyesters, wobei der Polyester aus Bernsteinsäure und optional weiteren Dicarbonsäuren und aliphatischen, cycloaliphatischen oder araliphatischen Diolen abgeleitet ist,

C) 0 bis 15 Gew.-Teile Pfropfpolymerisat,

D) 0 bis 15 Gew.-Teile Vinyl(Co)Polymerisat und/oder Polyalkylenterephthalat,

E) 0,1 bis 15 Gew.-Teile Zusatzstoffe

und wobei die Gewichtsteile auf das Gesamtgewicht der Zusammensetzung normiert sind.

3. Zusammensetzungen enthaltend

A) 65 bis 85 Gew.-Teile mindestens eines Polymers ausgewählt aus der Gruppe bestehend aus aromatisches Polycarbonat und aromatisches Polyestercarbonat,

B) 15 bis 35 Gew.-Teile mindestens eines verzweigten Polyesters, wobei der Polyester aus Bernsteinsäure und optional weiteren Dicarbonsäuren und aliphatischen, cycloaliphatischen oder araliphatischen Diolen abgeleitet ist,

C) 0 bis 10 Gew.-Teile Pfropfpolymerisat,

D) 0 bis 10 Gew.-Teile Vinyl(Co)Polymerisat und/oder Polyalkylenterephthalat,

E) 0,2 bis 5 Gew.-Teile Zusatzstoffe

und wobei die Gewichtsteile auf das Gesamtgewicht der Zusammensetzung normiert sind.

4. Zusammensetzungen gemäß einer der vorherigen Ausführungsformen, dadurch gekennzeichnet, dass der Polyester nur aus Bernsteinsäure und aliphatischen, cycloaliphatischen oder araliphatischen Diolen abgeleitet ist.

5. Zusammensetzungen gemäß einer der vorherigen Ausführungsformen, dadurch gekennzeichnet, dass die Diole aliphatisch sind.

6. Zusammensetzungen gemäß einer der vorherigen Ausführungsformen, dadurch gekennzeichnet, dass das Diol Butandiol ist.

7. Zusammensetzungen gemäß einer der vorherigen Ausführungsformen, dadurch gekennzeichnet, dass bei der Komponente B 0,1 bis 0,9 Gew.-% Verzeigungsmittel, bezogen auf die Komponente B, eingesetzt werden

8. Zusammensetzungen gemäß einer der vorherigen Ausführungsformen, dadurch gekennzeichnet, dass der Polyester durch Zugabe von 1,1,1-Trimethylolpropan verzweigt wird.

9. Zusammensetzungen gemäß der Ausführungsform 8, dadurch gekennzeichnet, dass 0,2 bis 0,6 Gew.-% Verzweigungsmittel bezogen auf die Komponente B eingesetzt werden.

10. Zusammensetzungen gemäß der Ausführungsform 8, dadurch gekennzeichnet, dass 0,3 bis 0,5 Gew.-% Verzweigungsmittel bezogen auf die Komponente B eingesetzt werden.

11. Zusammensetzungen gemäß einer der vorherigen Ausführungsformen, dadurch gekennzeichnet, dass die gewichtsgemittelten Molekulargewichte Mw der Komponente B zwischen 40 und 500 kg/mol liegen, bestimmt durch Gel-Permeations-Chromatographie gegen Polystyrol als Referenz.

12. Zusammensetzungen gemäß einer der vorherigen Ausführungsformen, dadurch gekennzeichnet, dass die gewichtsgemittelten Molekulargewichte Mw der Komponente B zwischen 80 und 400 kg/mol liegen, bestimmt durch Gel-Permeations-Chromatographie gegen Polystyrol als Referenz.
13. Zusammensetzungen gemäß einer der vorherigen Ausführungsformen, dadurch gekennzeichnet, dass die Komponente B eine Glasübergangstemperatur von -45°C bis 0°C aufweist.
14. Zusammensetzungen gemäß einer der vorherigen Ausführungsformen, dadurch gekennzeichnet, dass die Komponente B einen Schmelzpunkt von 90°C bis 125 °C aufweist.
15. Zusammensetzungen gemäß einer der vorherigen Ausführungsformen, dadurch gekennzeichnet, dass die Säurekomponente des Polyesters aus nachwachsenden Rohstoffen stammt.
16. Zusammensetzungen gemäß einer der vorherigen Ausführungsformen, enthaltend als Komponente C oder mehrere Pfropfpolymerisate von

C.1 30 bis 90 Gew.-%, wenigstens eines Vinylmonomeren auf
C.2 70 bis 10 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylacetat-Kautschuke, sowie Polybutadien-Styrol-Kautschuk.

17. Zusammensetzungen gemäß einer der vorherigen Ausführungsformen, wobei als Komponente C ABS-Polymerisate verwendet werden, die im Emulsionspolymerisationsverfahren durch Redox-Initiierung mit einem Initiatorsystem aus organischem Hydroperoxid und Ascorbinsäure hergestellt wurden.
18. Zusammensetzungen nach einer der vorherigen Ausführungsformen, enthaltend als Komponente E mindestens einen Zusatzstoff ausgewählt aus der Gruppe, die Flammschutzsynergisten, Antidrippingmittel, Gleit- und Entformungsmittel, Nukleiermittel, Stabilisatoren, Antistatika, Farbstoffe, Pigmente und Füll- und Verstärkungsstoffe umfasst.
19. Zusammensetzungen gemäß einer der vorherigen Ausführungsformen, dadurch gekennzeichnet, dass die gewichtsgemittelten Molekulargewichte Mw der Komponente A zwischen 23000 und 30000 g/mol liegen, bestimmt durch Gel-Permeations-Chromatographie gegen Polystyrol als Referenz.
20. Verwendung von Zusammensetzungen gemäß einer der Ausführungsformen 1 bis 19 zur Herstellung von spritzgegossenen oder thermogeformten Formkörper.
21. Formkörper erhältlich aus Zusammensetzungen gemäß einer der Ausführungsformen 1 bis 19.

In einer weiteren Ausführungsform ist die Zusammensetzung frei von kautschukmodifizierten Pfropfpolymerisaten.

In einer weiteren Ausführungsform ist die Zusammensetzung frei von Vinyl(Co)-polymerisaten, insbesondere SAN (Styrol-Acrylnitril) und Polyalkylenterephthalaten.

In einer weiteren Ausführungsform ist die Zusammensetzung frei von Vinyl(Co)-polymerisaten und kautschukmodifizierten Pfropfpolymerisaten.

In einer weiteren Ausführungsform ist die Zusammensetzung frei von Flammschutzmitteln.

Die einzelnen oben genannten Vorzugsbereiche unterschiedlicher Komponenten sind frei miteinander kombinierbar, wobei besonders bevorzugt gleiche Rückzugsebenen miteinander kombiniert werden.

## Komponente A

Erfindungsgemäß geeignete aromatische Polycarbonate und Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Bevorzugte Herstellungsweisen der erfindungsgemäß zu verwendenden Polycarbonate, einschließlich der Polyestercarbonate sind das bekannte Grenzflächenverfahren und das bekannte Schmelzeumesterungsverfahren (vgl. z. B. WO 2004/063249 A1, WO 2001/05866 A1, WO 2000/105867, US-A 5,340,905, US 5,097,002, US-A 5,717,057).

Die Herstellung aromatischer Polycarbonate und Polyestercarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

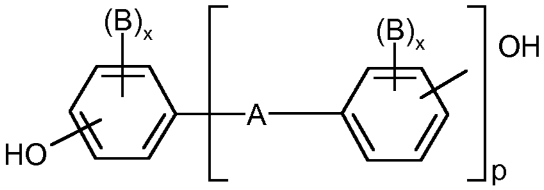

(I),

wobei

A eine Einfachbindung, $C_1$ bis $C_5$-Alkylen, $C_2$ bis $C_5$-Alkyliden, $C_5$ bis $C_6$-Cycloalkyliden, -O-,-SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

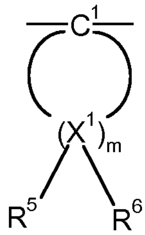

(II)

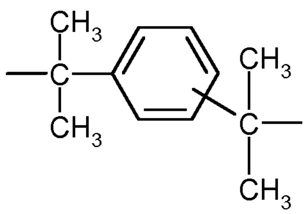

(III)

| | |
|---|---|
| B | jeweils $C_1$ bis $C_{12}$-Alkyl, vorzugsweise Methyl, Halogen, vorzugsweise Chlor und/oder Brom |
| x | jeweils unabhängig voneinander 0, 1 oder 2, |
| p | 1 oder 0 sind, und |
| $R^5$ und $R^6$ | für jedes $X^1$ individuell wählbar, unabhängig voneinander Wasserstoff oder $C_1$ bis $C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind. |

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt bevorzugt im Bereich 1,18 bis 1,4, besonders bevorzugt im Bereich 1,20 bis 1,32 (gemessen an Lösungen von 0,5 g Polycarbonat oder Polyestercarbonat in 100 ml Methylenchlorid-Lösung bei 25°C). Das gewichtsgemittelte Molekulargewicht Mw der aromatischen Polycarbonate und Polyestercarbonate liegt bevorzugt im Bereich von 15.000 bis 35.000 g/mol, weiter bevorzugt im Bereich von 20.000 bis 33.000 g/mol, besonders bevorzugt 23.000 bis 30.000 g/mol, bestimmt durch GPC (Gelpermeationschromatographie in Methylenchlorid mit Polycarbonat als Standard).

## Komponente B

Als Komponente B) enthalten die Zusammensetzungen erfindungsgemäß einen verzweigten Polyester oder

eine Mischung aus zwei oder mehr unterschiedlichen verzweigten Polyestern.

Polyester im Sinne der Erfindung sind Reaktionsprodukte aus Bernsteinsäure oder ihren reaktionsfähigen Derivaten und aliphatischen, cycloaliphatischen oder araliphatischen Diolen und Mischungen dieser Reaktionsprodukte.

Die Bernsteinsäureester werden durch Einbau relativ kleiner Mengen 3- oder 4-wertiger Alkohole oder 3- oder 4-basischer Carbonsäure, wie sie z.B. in der DE 1900270 A1 und der US 3 692 744 (A) beschrieben sind, verzweigt. Beispiele für bevorzugte Verzweigungsmittel sind Trimesinsäure, Trimellitsäure, Trimethylolethan, Trimethylolpropan und Pentaerythrit.

Besonders bevorzugt als Verzeigungsmittel ist Trimethylolpropan, am meisten bevorzugt 1,1,1-Trimethylolpropan.

Es ist ratsam, nicht mehr als 1 Gew.-% des Verzweigungsmittels, bezogen auf den Polyester, zu verwenden.

Bevorzugt werden 0,1 bis 0,9 Gew.-%, weiter bevorzugt 0,2 bis 0,6 Gew.-% und besonders bevorzugt 0,3 bis 0,5 Gew.-% des Verzeigungsmittels eingesetzt.

In einer besonders bevorzugten Ausführungsform werden 0,2 bis 0,6 Gew.-% 1,1,1-Trimethylolpropan, am meisten bevorzugt 0,3 bis 0,5 Gew.-% 1,1,1-Trimethylolpropan eingesetzt.

Bevorzugte Polyester lassen sich aus Bernsteinsäure (oder ihren reaktionsfähigen Derivaten) oder aus Mischungen aus Bernsteinsäure und bis zu 20 Mol.% Reste anderer aromatischer Dicarbonsäuren mit 8 bis 14 C-Atomen oder aliphatischer Dicarbonsäuren mit 4 bis 12 C-Atomen wie Reste von Phthalsäure, Isophthalsäure, Naphthalin-2,6-dicarbonsäure, 4,4'-Diphenyldicarbonsäure, Adipin-, Sebacinsäure, Azelainsäure, Cyclohexandiessigsäure, Cyclohexandicarbonsäure und aliphatischen Diolen mit 2 bis 10 C-Atomen, beispielsweise Ethandiol, Propylenglycol, Butandiol oder Pentandiol nach bekannten Methoden wie Kondensationspolymerisation von Dicarbonsäureverbindungen oder funktionalen Derivaten wie Anhydriden und Chloriden einerseits und Diolen andererseits herstellen. Die Kondensationspolymerisation kann in Lösung, Schmelze oder fester Phase, oder in einer Kombination von Reaktionsschritten in verschiedenen Phasen durchgeführt werden.

Das verzweigte Polyesterpolymer ist bevorzugt ausgewählt aus der Gruppe bestehend aus Polyethylensuccinat, Polyethylensuccinat-co-adipat, Polyethylensuccinat-co-terephthalat, Polybutylensuccinat, Polybutylensuccinat-co-adipat und Polybutylensuccinat-co-terephthalat.

Besonders bevorzugt sind Bernsteinsäureester, die allein aus Bernsteinsäure oder ihren reaktionsfähigen Derivaten (z.B. Dimethylestern oder Anhydriden) und einem aliphatischen Diol sowie Verzweigungsmittel hergestellt werden.

In einer weiter bevorzugten Ausführungsform sind die aliphatischen Diole Alkandiole mit 2 bis 10 C Atomen.

Ganz besonders bevorzugt sind Diole ausgewählt aus der Gruppe, die Ethandiol, Propandiol, Butandiol und Pentandiol umfasst, wobei Butandiol am meisten bevorzugt ist.

In der am meisten bevorzugten Ausführungsform wird ein verzweigter Polyester aus Bernsteinsäure und Butandiol verwendet.

In einer bevorzugten Ausführungsform werden zur Erhöhung des Molekulargewichts Kopplungsmittel eingesetzt. Beispiele für solche Kopplungsmittel sind 2,4-toluylen-diisocyanat, eine Mischung von 2,4-toluylen-diisocyanat und 2,6-toluylen-diisocyanat, diphenylmethan-diisocyanat, 1,5-naphthylendiisocyanat, xylylen- diisocyanat, hydriertes xylylen-diisocyanat, hexamethylen-diisocyanat und isophoron-diisocyanat. Bevorzugt werden hexamethylen-diisocyanat and isophoron-diisocyanat benutzt

Die Herstellung der erfindungsgemäßen Polyester ist beispielsweise in EP 0707047 A2 beschrieben.

Die vorzugsweise verwendeten Bernsteinsäureester besitzen gewichtsgemittelten Molekulargewichte Mw von 10 bis 1500 kg/mol (bestimmt durch Gel-Permeations-Chromatographie gegen Polystyrol als Referenz), bevorzugt 15 bis 750 kg/mol, noch weiter bevorzugt 40 bis 500 kg/mol und besonders bevorzugt 80 bis 400 kg/mol.

Als Säurekomponente eingesetzte Bernsteinsäure kann aus biologischen Quellen stammen, d.h. aus nachwachsenden Rohstoffen gewonnen sein, z.B. durch Fermentation von Glucose oder aus Hydrolysaten von Biomasse.

In einer besonders bevorzugten Ausführungsform ist der Polyester ein Polybutylensuccinat, das mit 0,3 bis 0,5 Gew.-% 1,1,1-Trimethylolpropan verzweigt wird und ein gewichtsgemittelten Molekulargewicht von 80 bis 400 kg/mol ((bestimmt durch Gel-Permeations-Chromatographie gegen Polystyrol als Referenz, Lösungsmittel Dichlormethan, Konzentration 6 g/l) besitzt.

Bei der Herstellung wird initial üblicherweise der entsprechende Dicarbonsäurediester in einer Veresterungs- oder Umesterungsreaktion bei Temperaturen von ca. 150°C bis 300°C gebildet, der dann bei steigender Temperatur und verminderten Druck polykondensiert wird, wobei die entsprechenden Hydroxyverbindungen und/oder Wasser abgespalten werden. Die letzten Stufen der Reaktion werden allgemein im Hochvakuum (<10mm Quecksilbersäule) durchgeführt, um ein Polyesterpolymer mit hohem Molekulargewicht darzustellen.

Beide Reaktionsschritte können optional unter Verwendung von Veresterungskatalysatoren und/oder Umesterungskatalysatoren und/oder Polykondensationskatalysatoren durchgeführt werden. Gebräuchliche Katalysatoren umfassen Ti-, Zr-, Sn-, und Sb-Verbindungen für die Veresterung, Mn-, Co- und Zn-Verbindungen für die Umesterung, und Sb-, Ti-, Pb-, Ge-, Zn- und Sn-Verbindungen für die Polykondensation, wobei die Verbindungen im allgemeinen ausgewählt sind aus der Gruppe, die Oxide, Alkoholate, Acetate und Carboxylate umfasst. Der Metallgehalt im Katalysator beträgt üblicherweise zwischen 20 und 500 ppm, bezogen auf 100 Gewichtsteile Polyesterpolymer.

Vorzugsweise hat die Komponente B eine Glasübergangstemperatur -50°C bis 90°C, besonders bevorzugt -45°C bis 0°C.

Die Komponente B besitzt vorzugsweise einen Schmelzpunkt von 80°C bis 260°C, weiter bevorzugt von 85°C bis 180°C und noch weiter bevorzugt von 90°C bis 125°C.

Die Bestimmung der Glasübergangstemperatur erfolgt nach DIN 53765 bei einer Heizrate von 20 K mit Stickstoffschutzgas, wobei die Glasübergangstemperatur als Schnittpunkt der Mittellinie zwischen den extrapolierten Basislinien vor und nach dem Glasübergang der Messkurve bestimmt wird.

## Komponente C

Die Komponente C umfasst ein oder mehrere Pfropfpolymerisate von

C.1 5 bis 95, vorzugsweise 30 bis 90 Gew.-%, wenigstens eines Vinylmonomeren auf

C.2 95 bis 5, vorzugsweise 70 bis 10 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylacetat-Kautschuke, sowie Polybutadien-Styrol-Kautschuk.

Die Pfropfgrundlage C.2 hat im Allgemeinen eine mittlere Teilchengröße (dso-Wert) von 0,05 bis 10 μm, vorzugsweise 0,1 bis 5 μm, besonders bevorzugt 0,2 bis 1 μm.

Monomere C.l sind vorzugsweise Gemische aus

C. 1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-($C_1$-$C_8$)-Alkylester, wie Methyl(meth)acrylat, Ethyl (meth)acrylat, und

C. 1.2 1 bis 50 Gew.-Teilen Vinylcyanide (ungesättigte Nitrile wie Acrylnitril und Methacrylnitril) und/oder (Meth) Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat.

Die Kennzeichnung des Bestandteils "(Meth)" in Klammern bei Acrylaten bedeutet das optionale Vorhandensein dieses Bestandteils.

Bevorzugte Pfropfgrundlagen C.2 sind Silikonacrylatkautschuke, Dienkautschuke (beispielsweise auf Basis Butadien und Isopren) oder Gemische von Dienkautschuken. Unter Dienkautschuk im erfindungsgemäßen Sinne sind auch Copolymerisate von Dienkautschuken oder deren Gemischen mit weiteren copolymerisierbaren Monomeren (z.B. gemäß C.1.1 und C.1.2) zu verstehen.

Die Pfropfgrundlagen C.2 weisen im Allgemeinen eine Glasübergangstemperatur von < 10°C, vorzugsweise < 0°C, besonders bevorzugt < -10°C auf.

In einer Ausführungsform ist das Monomer C.1 Polymethylmethacrylat (PMMA), wobei weiter bevorzugt die Pfropfgrundlage C.2 ein Silikonacrylatkautschuk ist.

Besonders bevorzugte Polymerisate C sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Der Gelanteil der Pfropfgrundlage C.2 beträgt bevorzugt mindestens 20 Gew.-%, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kern-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate C werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß C.2 der Polymerisate C sind vorzugsweise Polymerisate aus Acrylsäurealkylestern, gegebenenfalls mit bis zu 40 Gew.-%, bezogen auf C.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Geeignete Silikonkautschuke gemäß C.2. können durch Emulsionspolymerisation hergestellt werden, wie beispielsweise in US 2891920 und US 3294725 beschrieben. Weitere geeignete Pfropfgrundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen C.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).Silikonacrylat-Kautschuke sind bekannt und beispielsweise beschrieben in US 5,807,914, EP 430134 und US 4888388. Vorzugsweise eingesetzt wird ein in Emulsionspolymerisation hergestelltes Pfropfpolymer mit C.1 Methylmetacrylat und C.2 Silikonacrylat-Komposit-Kautschuk.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße dso ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Komponente **D**

Die Komponente D umfasst ein oder mehrere thermoplastische Vinyl(Co)Polymerisate und /oder Polyalkylenterephthalate.

Geeignet sind als Vinyl(Co)Polymerisate D Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

D. 1 50 bis 99, vorzugsweise 60 bis 80 Gew.-Teilen Vinylaromaten und/oder kernsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

D. 2 1 bis 50, vorzugsweise 20 bis 40 Gew.-Teilen Vinylcyanide (ungesättigte Nitrile) wie Acrylnitril und Methacrylnitril und/oder (Meth)Acryl-säure-($C_1$-$C_8$)-Alkylester, wie Methylmethacrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D sind harzartig, thermoplastisch und kautschukfrei. Besonders bevorzugt ist das Copolymerisat aus D.1 Styrol und D.2 Acrylnitril.

Die (Co)Polymerisate gemäß D sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000 g/mol.

Geeignet als Komponente D enthalten die Zusammensetzungen erfindungsgemäß ein oder eine Mischung aus zwei oder mehr unterschiedlichen Polyalkylenterephthalaten.

Polyalkylenterephthalate im Sinne der Erfindung sind Polyalkylenterephthalate, die sich von Terephthalsäure (oder ihren reaktionsfähigen Derivaten, z.B. Dimethylestern oder Anhydriden) und Alkandiolen, cycloaliphatischen oder araliphatischen Diolen und Mischungen daraus, beispielsweise auf Basis von Propylenglycol, Butandiol, Pentandiol, Hexandiol, 1,2-Cyclohexandiol, 1,4-Cyclohexandiol, 1,3-Cyclohexandiol, und Cyclohexyldimethanol, ableiten, wobei die erfindungsgemäße Diolkomponente mehr als 2 Kohlenstoffatome aufweist. Demgemäß werden als Komponente D bevorzugt Polybutylenterephthalat und/oder Polytrimethylenterephthalat, am meisten bevorzugt Polybutylenterephthalat eingesetzt.

Die erfindungsgemäßen Polyalkylenterephthalate können als Monomer der Disäure auch bis zu 5 Gew.-% Isophthalsäure enthalten.

Bevorzugte Polyalkylenterephthalate lassen sich aus Terephthalsäure (oder ihren reaktionsfähigen Derivaten) und aliphatischen oder cycloaliphatischen Diolen mit 3 bis 21 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise mindestens 90 Mol.-%, bezogen auf die Diolkomponente, Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-wertiger Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Propandiol-1,3 und/oder Butandiol-1,4 hergestellt worden sind (Polypropylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(propylenglykol-1,3/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In einer alternativen Ausführungsform können die erfindungsgemäß hergestellten Polyester auch im Gemisch

mit anderen Polyestern und/oder weiteren Polymeren eingesetzt werden, wobei hier bevorzugt Gemische von Polyalkylenterephthalaten mit anderen Polyestern eingesetzt werden.

**Komponente E**

Die Zusammensetzung kann weitere handelsübliche Zusatzstoffe gemäß Komponente E wie Flammschutzmittel, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Füll- und Verstärkungsstoffe (beispielsweise Glas- oder Karbonfasern, Glimmer, Kaolin, Talk, $CaCO_3$ und Glasschuppen) sowie Farbstoffe und Pigmente enthalten.

In einer besonders bevorzugten Ausführungsform ist die Zusammensetzung frei von Flammschutzmitteln.

Besonders bevorzugt werden als Zusatzstoffe Entformungsmittel, Stabilisatoren, sowie Farbstoffe und Pigmente eingesetzt, wobei Kohlenstoffasern und Carbonanotubes keine Farbstoffe und Pigmente im Sinne der vorliegenden Erfindung darstellen und vorzugsweise nicht in den Zusammensetzungen enthalten sind.

**Herstellung und Prüfung der Formmassen**

Die erfindungsgemäßen thermoplastischen Formmassen werden hergestellt, indem man die jeweiligen Bestandteile in bekannter Weise vermischt und bei Temperaturen von im Allgemeinen 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Außerdem können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

**Herstellung und Prüfung der Formmassen**

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 250°C compoundiert und granuliert.

Die fertigen Granulate werden auf einer Spritzgussmaschine zu den entsprechenden Probekörpern verarbeitet (Massetemperatur 240°C, Werkzeugtemperatur 80°C, Fließfrontgeschwindigkeit 240 mm/s).

Zur Charakterisierung der Eigenschaften der Probekörper wurden folgende Methoden angewandt:

Die **Schmelzeviskosität** wurde nach ISO 11443 bei 260°C bestimmt.

Das Zug-**E-Modul** wird gemäß ISO 527-1,-2 mit einer Dehnrate von 1mm/min gemessen.

Die **Schmelzefließfähigkeit** wurde beurteilt anhand der Schmelzevolumenfließrate (MVR) gemessen gemäß ISO 1133 bei einer Temperatur von 240°C und mit einer Stempellast von 5 kg.

Als Maß für die **Hydrolysebeständigkeit** der hergestellten Zusammensetzungen diente die Änderung des MVR gemessen nach ISO 1133 bei 240°C mit einer Stempellast von 5 kg bei einer 1-tägigen Lagerung des Granulats bei 95°C und 100% relativer Luftfeuchte ("FWL-Lagerung"). Dabei wurde der Anstieg des MVR-Wertes gegenüber dem MVR-Wert vor der entsprechenden Lagerung als ΔMVR(hydr.), welcher sich durch nachstehende Formel definiert, berechnet.

$$\Delta MVR(hydr.) = \frac{MVR(nach\,FWL - Lagerung) - MVR(vor\,Lagerung)}{MVR(vor\,Lagerung)} \bullet 100\%$$

**Komponente A1**

Lineares Polycarbonat auf Basis Bisphenol A mit einer relativen Lösungsviskosität von $\eta_{rel}$ = 1,30, gemessen in $CH_2Cl_2$ als Lösungsmittel bei 25°C und einer Konzentration von 0,5 g/100 ml.

**Komponente A2**

Lineares Polycarbonat auf Basis Bisphenol A mit einer relativen Lösungsviskosität von $\eta_{rel}$ = 1,32, gemessen in $CH_2Cl_2$ als Lösungsmittel bei 25°C und einer Konzentration von 0,5 g/100 ml.

**Komponente B1**

Linearer Polyester aus 48 Gew.-% Bernsteinsäure, 51 Gew.-% 1,4-Butandiol und 1,0 Gew.-% Hexamethylenediisocyanat mit einem gewichtsgemittelten Molekulargewicht Mw von 255 kg/mol (bestimmt durch GPC gegen Polystyrol Referenz, Lösungsmittel Dichlormethan, Konzentration 6 g/l), Handelsname Bionolle® 1001 der Firma Showa Denko.

**Komponente B2**

Verzweigter Polyester aus 48,1 Gew.-% Bernsteinsäure, 50,7 Gew.-% 1,4-Butandiol, 0,8 Gew.-% Hexamethylenediisocyanat und 0,4 Gew.-% 1,1,1-Trimethylolpropan mit einem gewichtsgemittelten Molekulargewicht Mw von 245 kg/mol (bestimmt durch GPC gegen Polystyrol Referenz, Lösungsmittel Dichlormethan, Konzentration 6 g/l), Handelsname Bionolle® 1903 der Firma Showa Denko

**Komponente E**

Pentaerythrittetrastearat als Gleit-/Entformungsmittel

Aus Tabelle 1 ist ersichtlich, dass die Zusammensetzungen der Beispiele enthaltend verzweigtes Polyalkylensuccinat 1 bis 4 die erfindungsgemäße Aufgabe lösen, d.h. eine Kombination aus guter Hydrolysestabilität (≤ 200% Abweichung vom Ausgangswert des MVR 240°C/5kg nach Lagerung für 1d / 95 °C/ 100% rel. Luftfeuchtigkeit), hohe Kerbschlagzähigkeit (≥20kJ/$m^2$), hohes Zug-E-Modul und verbesserter Schmelzeviskosität unter Bearbeitungsbedingungen aufweisen während bei Verwendung eines unverzweigten Polyalkylensuccinats die Fließfähigkeit, Zugfestigkeit und Hydrolysebeständigkeit nicht das erforderliche Maß erreicht. Ist Anteil des Polyesters zu groß (Vgl. 7), wird das erforderliche Eigenschaftsprofil ebenfalls nicht erfüllt.

**Tabelle 1:** Zusammensetzung und Eigenschaften der Formmassen

| **Komponenten (Gew.-Teile)** | Vgl. 1 | Vgl. 2 | Vgl. 3 | Vgl. 4 | Vgl. 5 | Vgl. 6 | Bsp. 1 | Bsp. 2 | Bsp. 3 | Bsp. 4 | Vgl. 7 |
|---|---|---|---|---|---|---|---|---|---|---|---|
| A1 | 95,6 | 85,6 | 75,6 | 65,6 | 55,6 | 45,6 | 85,6 | 75,6 | 65,6 | 55,6 | 45,6 |
| A2 | 4,0 | 4,0 | 4,0 | 4,0 | 4,0 | 4,0 | 4,0 | 4,0 | 4,0 | 4,0 | 4,0 |
| B1 | | 10,0 | 20,0 | 30,0 | 40,0 | 60,0 | | | | | |
| B2 | | | | | | | 10,0 | 20,0 | 30,0 | 40,0 | 60,0 |
| E | 0,4 | 0,4 | 0,4 | 0,4 | 0,4 | 0,4 | 0,4 | 0,4 | 0,4 | 0,4 | 0,4 |
| **Eigenschaften** | | | | | | | | | | | |
| Schmelzeviskosität (260°C/1000$s^{-1}$) [Pas] | 846 | 444 | 299 | 204 | 162 | 133 | 407 | 208 | 146 | 110 | 82 |
| MVR 240°C/5kg [ccm/10 min] | 3,80 | 4,90 | 5,90 | 8,10 | 13,10 | 23,90 | 5,40 | 7,10 | 10,30 | 26,00 | 42,80 |
| Zug-E-Modul (ISO 527) [N/$mm^2$] | 2400 | 2140 | 2040 | 1940 | 1790 | 1475 | 2190 | 2110 | 2085 | 1930 | 1580 |
| ΔMVR Hydrolyse nach 1 Tag (95°C/99%RH) [%] | 5 | 52 | 256 | 346 | 434 | 644 | 16 | 73 | 125 | 189 | 240 |

**Patentansprüche**

1. Zusammensetzungen enthaltend

A) 50 bis 95 Gew.-Teile mindestens eines Polymers ausgewählt aus der Gruppe bestehend aus aromatisches Polycarbonat und aromatisches Polyestercarbonat,
B) 5 bis 50 Gew.-Teile mindestens eines verzweigten Polyesters wobei der Polyester aus Bernsteinsäure und optional weiteren Dicarbonsäuren und aliphatischen, cycloaliphatischen oder araliphatischen Diolen abgeleitet ist,
C) 0 bis 20 Gew.-Teile Pfropfpolymerisat,
D) 0 bis 20 Gew.-Teile Vinyl(Co)Polymerisat und/oder Polyalkylenterephthalat,
E) 0 bis 30 Gew.-Teile Zusatzstoffe

und wobei die Gewichtsteile auf das Gesamtgewicht der Zusammensetzung normiert sind.

2. Zusammensetzungen gemäß Anspruch 1 enthaltend

A) 60 bis 90 Gew.-Teile mindestens eines Polymers ausgewählt aus der Gruppe bestehend aus aromatisches Polycarbonat und aromatisches Polyestercarbonat,
B) 10 bis 40 Gew.-Teile mindestens eines verzweigten Polyesters, wobei der Polyester aus Bernsteinsäure und optional weiteren Dicarbonsäuren und aliphatischen, cycloaliphatischen oder araliphatischen Diolen abgeleitet ist,
C) 0 bis 15 Gew.-Teile Pfropfpolymerisat,
D) 0 bis 15 Gew.-Teile Vinyl(Co)Polymerisat und/oder Polyalkylenterephthalat,
E) 0,1 bis 15 Gew.-Teile Zusatzstoffe

und wobei die Gewichtsteile auf das Gesamtgewicht der Zusammensetzung normiert sind.

3. Zusammensetzungen gemäß Anspruch 1 enthaltend

A) 65 bis 85 Gew.-Teile mindestens eines Polymers ausgewählt aus der Gruppe bestehend aus aromatisches Polycarbonat und aromatisches Polyestercarbonat,
B) 15 bis 35 Gew.-Teile mindestens eines verzweigten Polyesters, wobei der Polyester aus Bernsteinsäure und optional weiteren Dicarbonsäuren und aliphatischen, cycloaliphatischen oder araliphatischen Diolen abgeleitet ist,
C) 0 bis 10 Gew.-Teile Pfropfpolymerisat,
D) 0 bis 10 Gew.-Teile Vinyl(Co)Polymerisat und/oder Polyalkylenterephthalat,
E) 0,2 bis 5 Gew.-Teile Zusatzstoffe

und wobei die Gewichtsteile auf das Gesamtgewicht der Zusammensetzung normiert sind.

4. Zusammensetzungen gemäß einem der vorherigen Ansprüche, **dadurch gekennzeichnet, dass** der Polyester nur aus Bernsteinsäure und aliphatischen, cycloaliphatischen oder araliphatischen Diolen abgeleitet ist.

5. Zusammensetzungen gemäß einem der vorherigen Ansprüche, **dadurch gekennzeichnet, dass** die Diole aliphatisch sind.

6. Zusammensetzungen gemäß einem der vorherigen Ansprüche, **dadurch gekennzeichnet, dass** das Diol Butandiol ist.

7. Zusammensetzungen gemäß einem der vorherigen Ansprüche, **dadurch gekennzeichnet, dass** der Polyester durch Zugabe von 1,1,1-Trimethylolpropan verzweigt wird.

8. Zusammensetzungen gemäß einem der vorherigen Ansprüche, **dadurch gekennzeichnet, dass** die gewichtsgemittelten Molekulargewichte Mw der Komponente B zwischen 40 und 500 kg/mol liegen, bestimmt durch Gel-Permeations-Chromatographie gegen Polystyrol als Referenz.

9. Zusammensetzungen gemäß einem der vorherigen Ansprüche, **dadurch gekennzeichnet, dass** die Säurekomponente des Polyesters aus nachwachsenden Rohstoffen stammt.

**10.** Zusammensetzungen nach einem der vorhergehenden Ansprüche, enthaltend als Komponente E mindestens einen Zusatzstoff ausgewählt aus der Gruppe, die Flammschutzsynergisten, Antidrippingmittel, Gleit- und Entformungsmittel, Nukleiermittel, Stabilisatoren, Antistatika, Farbstoffe, Pigmente und Füll- und Verstärkungsstoffe umfasst.

**11.** Verwendung von Zusammensetzungen gemäß einem der Ansprüche 1 bis 10 zur Herstellung von spritzgegossenen oder thermogeformten Formkörper.

**12.** Formkörper erhältlich aus Zusammensetzungen gemäße einem der Ansprüche 1 bis 10.

**Claims**

**1.** Compositions comprising

A) 50 to 95 parts by weight of at least one polymer selected from the group consisting of aromatic polycarbonate and aromatic polyestercarbonate,
B) 5 to 50 parts by weight of at least one branched polyester, the polyester being derived from succinic acid and optionally further dicarboxylic acids and aliphatic, cycloaliphatic or araliphatic diols,
C) 0 to 20 parts by weight of graft polymer,
D) 0 to 20 parts by weight of vinyl (co)polymer and/or polyalkylene terephthalate,
E) 0 to 30 parts by weight of additives,

the parts by weight being standardized to the total weight of the composition.

**2.** Compositions according to Claim 1, comprising

A) 60 to 90 parts by weight of at least one polymer selected from the group consisting of aromatic polycarbonate and aromatic polyestercarbonate,
B) 10 to 40 parts by weight of at least one branched polyester, the polyester being derived from succinic acid and optionally further dicarboxylic acids and aliphatic, cycloaliphatic or araliphatic diols,
C) 0 to 15 parts by weight of graft polymer,
D) 0 to 15 parts by weight of vinyl (co)polymer and/or polyalkylene terephthalate,
E) 0.1 to 15 parts by weight of additives,

the parts by weight being standardized to the total weight of the composition.

**3.** Compositions according to Claim 1, comprising

A) 65 to 85 parts by weight of at least one polymer selected from the group consisting of aromatic polycarbonate and aromatic polyestercarbonate,
B) 15 to 35 parts by weight of at least one branched polyester, the polyester being derived from succinic acid and optionally further dicarboxylic acids and aliphatic, cycloaliphatic or araliphatic diols,
C) 0 to 10 parts by weight of graft polymer,
D) 0 to 10 parts by weight of vinyl (co)polymer and/or polyalkylene terephthalate,
E) 0.2 to 5 parts by weight of additives,

the parts by weight being standardized to the total weight of the composition.

**4.** Compositions according to any of the preceding claims, **characterized in that** the polyester is derived only from succinic acid and aliphatic, cycloaliphatic or araliphatic diols.

**5.** Compositions according to any of the preceding claims, **characterized in that** the diols are aliphatic.

**6.** Compositions according to any of the preceding claims, **characterized in that** the diol is butanediol.

**7.** Compositions according to any of the preceding claims, **characterized in that** the polyester is branched by addition

of 1,1,1-trimethylolpropane.

**8.** Compositions according to any of the preceding claims, **characterized in that** the weight-average molecular weights Mw of component B are between 40 and 500 kg/mol, determined by gel permeation chromatography against polystyrene as reference.

**9.** Compositions according to any of the preceding claims, **characterized in that** the acid component of the polyester originates from renewable raw materials.

**10.** Compositions according to any of the preceding claims, comprising as component E at least one additive selected from the group of flame retardant synergists, anti-dripping agents, lubricants and mould release agents, nucleating agents, stabilizers, antistats, dyes, pigments and fillers and reinforcing agents.

**11.** Use of compositions according to any of Claims 1 to 10 for producing injection-moulded or thermoformed shaped bodies.

**12.** Shaped bodies obtainable from compositions according to any of Claims 1 to 10.

## Revendications

**1.** Compositions contenant :

A) 50 à 95 parties en poids d'au moins un polymère choisi dans le groupe constitué par un polycarbonate aromatique et un polyester-carbonate aromatique,
B) 5 à 50 parties en poids d'au moins un polyester ramifié, le polyester étant dérivé d'acide succinique et éventuellement d'autres acides dicarboxyliques et de diols aliphatiques, cycloaliphatiques ou araliphatiques,
C) 0 à 20 parties en poids d'un polymère greffé,
D) 0 à 20 parties en poids d'un (co)polymère de vinyle et/ou de polyalkylène téréphtalate,
E) 0 à 30 parties en poids d'additifs,

les parties en poids étant normées par rapport au poids total de la composition.

**2.** Compositions selon la revendication 1, contenant :

A) 60 à 90 parties en poids d'au moins un polymère choisi dans le groupe constitué par un polycarbonate aromatique et un polyester-carbonate aromatique,
B) 10 à 40 parties en poids d'au moins un polyester ramifié, le polyester étant dérivé d'acide succinique et éventuellement d'autres acides dicarboxyliques et de diols aliphatiques, cycloaliphatiques ou araliphatiques,
C) 0 à 15 parties en poids d'un polymère greffé,
D) 0 à 15 parties en poids d'un (co)polymère de vinyle et/ou de polyalkylène téréphtalate,
E) 0,1 à 15 parties en poids d'additifs,

les parties en poids étant normées par rapport au poids total de la composition.

**3.** Compositions selon la revendication 1, contenant :

A) 65 à 85 parties en poids d'au moins un polymère choisi dans le groupe constitué par un polycarbonate aromatique et un polyester-carbonate aromatique,
B) 15 à 35 parties en poids d'au moins un polyester ramifié, le polyester étant dérivé d'acide succinique et éventuellement d'autres acides dicarboxyliques et de diols aliphatiques, cycloaliphatiques ou araliphatiques,
C) 0 à 10 parties en poids d'un polymère greffé,
D) 0 à 10 parties en poids d'un (co)polymère de vinyle et/ou de polyalkylène téréphtalate,
E) 0,2 à 5 parties en poids d'additifs,

les parties en poids étant normées par rapport au poids total de la composition.

**4.** Compositions selon l'une quelconque des revendications précédentes, **caractérisées en ce que** le polyester n'est

dérivé que d'acide succinique et de diols aliphatiques, cycloaliphatiques ou araliphatiques.

5. Compositions selon l'une quelconque des revendications précédentes, **caractérisées en ce que** les diols sont aliphatiques.

6. Compositions selon l'une quelconque des revendications précédentes, **caractérisées en ce que** le diol est le butanediol.

7. Compositions selon l'une quelconque des revendications précédentes, **caractérisées en ce que** le polyester est ramifié par ajout de 1,1,1-triméthylolpropane.

8. Compositions selon l'une quelconque des revendications précédentes, **caractérisées en ce que** les poids moléculaires moyennés en poids Mw du composant B sont compris entre 40 et 500 kg/mol, déterminés par chromatographie par perméation de gel par rapport au polystyrène en tant que référence.

9. Compositions selon l'une quelconque des revendications précédentes, **caractérisées en ce que** le composant acide du polyester provient de matières premières renouvelables.

10. Compositions selon l'une quelconque des revendications précédentes, contenant en tant que composant E au moins un additif choisi dans le groupe comprenant les synergistes ignifuges, les agents anti-égouttement, les lubrifiants et les agents de démoulage, les agents de nucléation, les stabilisateurs, les antistatiques, les colorants, les pigments et les charges et les matières renforçantes.

11. Utilisation de compositions selon l'une quelconque des revendications 1 à 10 pour la fabrication de corps moulés par injection ou thermo-moulés.

12. Corps moulé pouvant être obtenu à partir de compositions selon l'une quelconque des revendications 1 à 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 7324159 A
- JP 2011016960 A
- JP 2005008671 A
- US 8021864 B
- EP 0707047 A2
- US 8071694 B
- DE AS1495626 B
- DE 2232877 A
- DE 2703376 A
- DE 2714544 A
- DE 3000610 A
- DE 3832396 A
- DE 3077934 A
- WO 2004063249 A1
- WO 200105866 A1
- WO 2000105867 A
- US 5340905 A
- US 5097002 A
- US 5717057 A
- DE 2842005 A
- US 3419634 A
- DE 3334782 A
- DE 2940024 A
- DE 3007934 A
- DE 1900270 A1
- US 3692744 A
- DE OS2035390 A
- US 3644574 A
- DE OS2248242 A
- GB 1409275 A
- US 4937285 A
- US 2891920 A
- US 3294725 A
- DE OS3704657 A
- DE OS3704655 A
- DE OS3631540 A
- DE OS3631539 A
- US 5807914 A
- EP 430134 A
- US 4888388 A
- DE 2407674 A
- DE 2407776
- DE 2715932
- DE 1900270 A


### In der Beschreibung aufgeführte Nicht-Patentliteratur


- Chemistry and Physics of Polycarbonates. **SCHNELL.** Herstellung aromatischer Polycarbonate. Interscience Publishers, 1964
- **ULLMANNS.** Enzyklopädie der Technischen Chemie. 1980, vol. 19, 280 ff
- Ullmann's Encyclopedia of Industrial Chemistry. VCH-Verlag, 1992, vol. A21, 635, , 656
- **M. HOFFMANN ; H. KRÖMER ; R. KUHN.** Polymeranalytik. Georg Thieme-Verlag, 1977, vol. I und II
- **W. SCHOLTAN ; H. LANGE.** *Kolloid, Z. und Z. Polymere,* 1972, vol. 250, 782-1796
- Kunststoff-Handbuch. Karl-Hanser-Verlag, 1973, vol. VIII, 695 FF